# EUROPÄISCHE PATENTSCHRIFT

(11) **EP 1 864 762 B1**
(45) Veröffentlichungstag und Bekanntmachung des Hinweises auf die Patenterteilung: **17.12.2008**
(21) Anmeldenummer: 07109172.2
(22) Anmeldetag: 30.05.2007
(51) Int. Cl.: B25F 5/00, H02K 9/19, B28D 7/02

(54) **Flüssigkeitsgekühlte tragbare Elektrowerkzeugmaschine mit Standby-Verfahren**
Liquid-cooled portable electric machine tool with standby mode
Machine-outil électrique portable refroidie par liquide dotée d'un procédé standby

(30) Priorität: 07.06.2006 DE 102006000273
(43) Veröffentlichungstag der Anmeldung: 12.12.2007
(73) Patentinhaber: HILTI Aktiengesellschaft, 9494 Schaan (LI)
(72) Erfinder: Lieb, Konrad, 9470, Buchs (CH); Koslowski, Oliver, 86932, Pürgen (DE)
(74) Vertreter: Wildi, Roland

(56) Entgegenhaltungen:
- DE-A- 19 846 712
- DE-U- 9 212 178
- JP-A- 60 204 241

## Beschreibung

Die Erfindung bezeichnet eine mit einem Stromversorgungsnetz verbindbare, flüssigkeitsgekühlte, tragbare Elektrowerkzeugmaschine, insbesondere eine Diamantbohrmaschine für Gestein gemäß dem Oberbegriff des Anspruchs 1, sowie ein zugeordnetes Standby-Verfahren gemäß dem Oberbegriff des Anspruchs 4.

Eine derartige Elektrowerkzeugmaschine geht beispielsweise aus der DE 19846712 hervor.

Bei derartigen Diamantbohrmaschinen ist zum Antrieb der Kernbohrkronen ein hohes Drehmoment notwendig. Deshalb ist bei leistungsfähigen Maschinen der Antrieb über elektronisch kommutierte Elektromotoren ausgebildet, die zudem von der zum Diamantbohren benutzten Spülflüssigkeit gekühlt werden. Da die Spülflüssigkeit eine Wassersuspension ist, besteht beim Einsatz bei Temperaturen unterhalb des Gefrierpunktes die Gefahr des Einfrierens der Kühlleitungen bei nicht benutzten sowie nicht ordnungsgemäss entwässerten tragbare Elektrowerkzeugmaschinen.

Nach der W002060651 weist eine tragbare Elektrowerkzeugmaschine ohne Kühlleitungen einen Temperatursensor und eine Motorsteuerelektronik für den Elektromotor auf, wobei über einen Regelkreis eine unzulässige Erwärmung des Aussengehäuses der benutzten tragbare Elektrowerkzeugmaschine vermieden wird.

Nach der DE20204570U weist eine tragbare Elektrowerkzeugmaschine ohne Kühlleitungen einen Temperatursensor und ein von einem Rechenmittel über einen elektrischen Leistungsschalter gesteuertes Heizelement für einen Handgriff der benutzten tragbare Elektrowerkzeugmaschine auf.

Nach der DE19846712 ist eine Diamantbohrmaschine mit im Spülkreislauf integrierten Kühlleitungen mit einem diesen benachbarten Temperatursensor sowie einer von diesen gekühlten Motorsteuerelektronik und Elektromotor bekannt, wobei eine unzulässige Erwärmung der benutzten tragbare Elektrowerkzeugmaschine vermieden wird.

Die Aufgabe der Erfindung besteht in der Realisierung eines Gefrierschutzes für unbenutzte flüssigkeitsgekühlte tragbare Elektrowerkzeugmaschinen.

Die Aufgabe wird im Wesentlichen durch die Merkmale der unabhängigen Ansprüche gelöst. Vorteilhafte Weiterbildungen ergeben sich aus den Unteransprüchen.

So weist eine mit einem Stromversorgungsnetz verbindbare, flüssigkeitsgekühlte tragbare Elektrowerkzeugmaschine mit einem Kühlkanal für eine Kühlflüssigkeit und mit einer Motorsteuerung für einen elektronisch kommutierten Elektromotor einen Temperatursensor auf, der mit einem Rechenmittel der Motorsteuerung verbunden ist, welche eine im Standby-Betrieb bestromte Gefrierschutzsteuerung aufweist.

Im zugeordneten, bei deaktiviertem Drehantrieb aktivierten, Standby-Verfahren wird in einem ersten Schritt mittels des Temperatursensors eine Temperatur gemessen sowie mittels des Rechenmittels mit einer Untergrenztemperatur verglichen, wobei bei Unterschreitung dieser Untergrenztemperatur in einem zweiten Schritt mittels der Motorsteuerung der Elektromotor antriebslos (mit Drehzahlvorgabe Null) mit einer Heizstromstärke bestromt wird.

Durch die Ansteuerung des Elektromotors mit der Heizstromstärke bei der Drehzahlvorgabe Null werden im Falle der Unterschreitung der Untergrenztemperatur sowohl in der Motorsteuerung als auch im antriebslos bestromten Elektromotor hinreichend Wirkverluste (ca. 30-100 W) als Abwärme erzeugt, um ein Gefrieren der Kühlflüssigkeit im Kühlkanal zu verhindern.

Vorteilhaft ist zumindest ein Temperatursensor dem Elektromotor, der Motorelektronik und/oder dem Kühlkanal benachbart angeordnet, wodurch die Temperatur innerhalb des Kühlkanals hinreichend genau erfassbar ist.

Vorteilhaft ist der Elektromotor eine Drehstrommaschine, wodurch die Drehzahvorgabe Null durch eine Bestromung mit Gleichstrom realisierbar ist..

Vorteilhaft steigt im zweiten Schritt die Heizstromstärke mit der Abweichung der Temperatur von der Untergrenztemperatur, wodurch bei niedrigerer Temperatur ein höherer Strom fliesst, der zu einer höheren Verlustleistung führt und somit die Elektrowerkzeugmaschine stärker heizt.

Vorteilhaft liegt im ersten Schritt die Untergrenztemperatur im Bereich von 5 °C bis 10 °C, wodurch das Einfrieren einer Wassersuspension als Kühlflüssigkeit zuverlässig zu verhindern ist.

Vorteilhaft wird im ersten Schritt die Temperatur mit einer Obergrenztemperatur verglichen, wobei bei Überschreitung dieser Obergrenztemperatur die im zweiten Schritt aktivierte Bestromung des Elektromotors beendet wird, wodurch die Heizung definiert beendet wird.

Vorteilhaft liegt im ersten Schritt die Obergrenztemperatur im Bereich von +10 °C bis +30 °C, weiter vorteilhaft bei für dem Elektromotor und der Motorsteuerung einzeln zugeordnete Temperatursensoren bei jeweils +15 °C für beide Temperatursensoren, wodurch eine Überhitzung zuverlässig zu verhindern ist.

Vorteilhaft wird der erste Schritt zeitlich versetzt in einer Standby-Schleife wiederholt, weiter vorteilhaft je 10 s, wodurch rechtzeitig auf Änderungen der Umgebungstemperatur reagiert werden kann.

Die Erfindung wird bezüglich eines vorteilhaften Ausführungsbeispiels näher erläutert mit:
Fig. 1 als tragbare Elektrowerkzeugmaschine
Fig. 2 als Programmablaufplan des Standby-Verfahrens

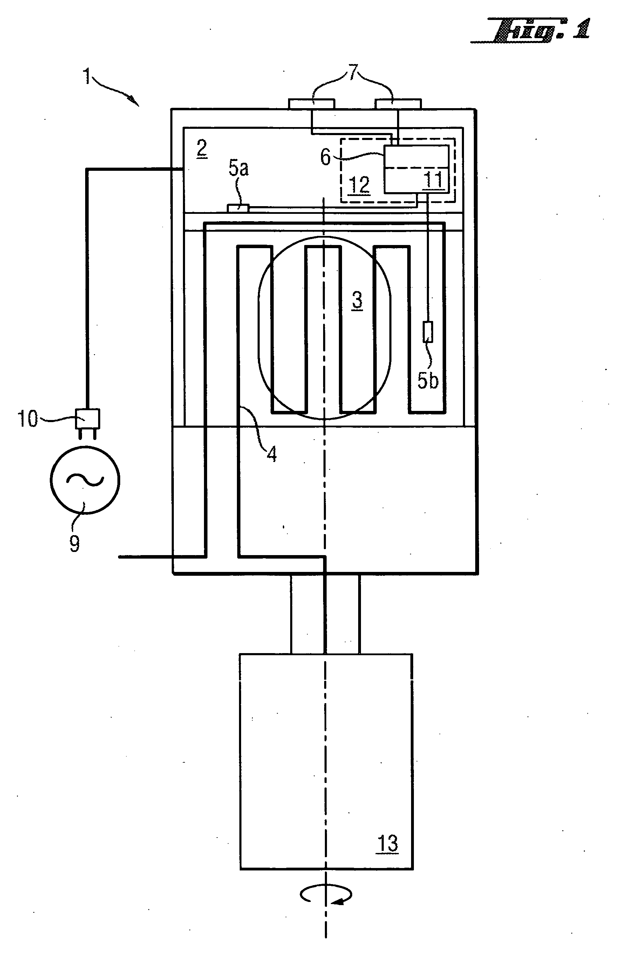

Nach Fig. 1 weist eine über einen Netzstecker 10 mit einem Stromversorgungsnetz 9 verbindbare, tragbare Elektrowerkzeugmaschine 1 in Form einer Diamantbohrmaschine mit einer drehend angetriebenen Hohlbohrkrone 13 eine Motorsteuerung 2 für einen elektronisch kommutierten Elektromotor 3 und einen beide kühlenden Kühlkanal 4 für eine Kühlflüssigkeit in Form von Wasser auf. Dem Kühlkanal 4 sind nahe der Motorsteuerung 2 sowie nahe des Elektromotors 3 zwei Temperatursensoren 5a, 5b zugeordnet, die mit einem Rechenmittel 6 der Motorsteuerung 2 in Form eines Mikrocontrollers verbunden sind, welcher mit zwei von aussen betätigbaren elektronischen Tastschaltern 7 zum Ein-/Ausschalten des Drehantriebs verbunden ist. Die somit auch bei ausgeschaltetem Drehantrieb im Standby-Betrieb mit dem Stromversorgungsnetz 9 verbundene Motorelektronik 2 bildet mit dem Rechenmittel 6 und einem dieses steuernden Gefrierschutzalgorithmus 11 eine Gefrierschutzsteuerung 12 aus.

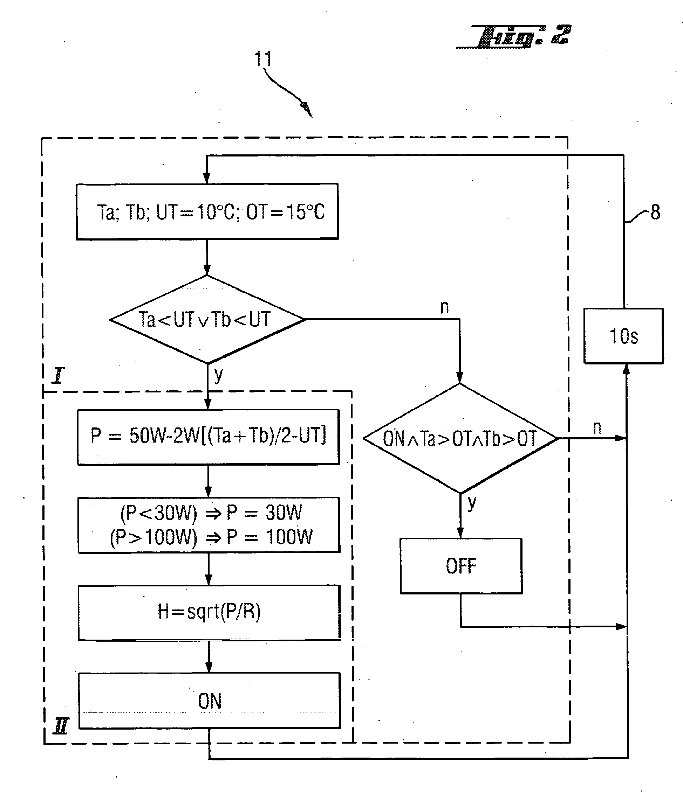

Nach Fig. 2 werden im zugeordneten Standby-Verfahren, welches bei ausgeschaltetem Drehantrieb aktiviert ist und als programmsteuernder Gefrierschutzalgorithmus 11 im Rechenmittel 6 (Fig. 1) implementiert ist, in einer, alle 10s wiederholten Standby-Schleife 8 in einem ersten Schritt I mittels der Temperatursensoren 5a, 5b (Fig. 1) die Temperaturen Ta, Tb gemessen sowie mittels des Rechenmittels 6 (Fig. 1) mit einer Untergrenztemperatur UT von 10 °C verglichen, wobei bei Unterschreitung dieser Untergrenztemperatur UT durch einen der Temperaturwerte in einem zweiten Schritt II über das Signal ON der Elektromotor 3 (Fig. 1) über die Motorsteuerung 2 (Fig. 1) antriebslos bestromt wird, indem der als Drehstrommaschine ausgeführte Elektromotor 3 (Fig. 1) mit Gleichstrom bestromt wird. Die Heizstromstärke H ist monoton zur Wurzel der mittleren Temperaturdifferenz UT-(Ta+Tb)/2. Die somit wirksame Heizleistung P ist abhängig vom Motorwiderstand R. Zusätzlich werden bei nicht Unterschreitung der Untergrenztemperatur UT die Temperaturen Ta und Tb mit der Obergrenztemperatur OT von +15°C verglichen, wobei bei Überschreitung der Obergrenztemperatur OT durch beide Temperaturen Ta und Tb über das Signal OFF allfällig aktivierte Bestromung des Elektromotors beendet wird.

## Patentansprüche

1. Flüssigkeitsgekühlte, tragbare, mit einem Stromversorgungsnetz (9) verbindbare Elektrowerkzeugmaschine mit einem Kühlkanal (4) für eine Kühlflüssigkeit, mit einer Motorsteuerung (2) für einen elektronisch kommutierten Elektromotor (3), und mit zumindest einem Temperatursensor (5a, 5b), der mit einem Rechenmittel der Motorsteuerung (2) verbunden ist, **dadurch gekennzeichnet dass** die Motorsteuerung (2) eine im Standby-Betrieb bestromte Gefrierschutzsteuerung (12) aufweist..

2. Elektrowerkzeugmaschine nach Anspruch 1, **dadurch gekennzeichnet, dass** zumindest ein Temperatursensor (5a, 5b) dem Elektromotor (3), der Motorelektronik (2) und/oder dem Kühlkanal (4) benachbart angeordnet ist.

3. Elektrowerkzeugmaschine nach Anspruch 1 oder 2, **dadurch gekennzeichnet, dass** der Elektromotor (3) eine Drehstrommaschine ist.

4. Standby-Verfahren bei deaktiviertem Drehantrieb einer flüssigkeitsgekühlten tragbare Elektrowerkzeugmaschine (1) nach einem der Ansprüche 1 bis 3, **dadurch gekennzeichnet, dass** in einem ersten Schritt (I) mittels des Temperatursensors (5a, 5b) eine Temperatur (Ta, Tb) gemessen sowie diese mittels des Rechenmittels (6) mit einer Untergrenztemperatur (UT) verglichen wird, wobei bei Unterschreitung dieser Untergrenztemperatur (UT) in einem zweiten Schritt (II) mittels der Motorsteuerung (2) der Elektromotor (3) antriebslos mit einer Heizstromstärke (H) bestromt wird.

5. Standby-Verfahren nach Anspruch 4, **dadurch gekennzeichnet, dass** im zweiten Schritt (II) die Heizstromstärke (H) mit der Abweichung der Temperatur (Ta, Tb) von der Untergrenztemperatur (UT) steigt.

6. Standby-Verfahren nach Anspruch 4 oder 5, **dadurch gekennzeichnet, dass** im ersten Schritt die Untergrenztemperatur (UT) im Bereich von 5 °C bis 10 °C liegt.

7. Standby-Verfahren nach einem der Ansprüche 4 bis 6, **dadurch gekennzeichnet, dass** im ersten Schritt (I) die Temperatur (Ta, Tb) mit einer Obergrenztemperatur (OT) verglichen wird, wobei bei Überschreitung dieser Obergrenztemperatur (OT) die im zweiten Schritt (II) aktivierte Bestromung des Elektromotors (3) beendet wird.

8. Standby-Verfahren nach Anspruch 7, **dadurch gekennzeichnet, dass** die Obergrenztemperatur (OT) im Bereich von +10 °C bis +30 °C liegt.

9. Standby-Verfahren nach einem der Ansprüche 4 bis 8, **dadurch gekennzeichnet, dass** der erste Schritt (I) in einer Standby-Schleife (8) zeitlich versetzt wiederholt wird.

## Claims

1. Liquid-cooled portable electric machine tool which can be connected to a power supply system (9), comprising a cooling duct (4) for a coolant, a mc tor control unit (2) for an electronically commutated electric motor (3) and a least one temperature sensor (5a, 5b) connected to a computing means of the me tor control unit (2), **characterised in that** the motor control unit (2) has a freeze protection control device (12) supplied with current in the standby mode.

2. Electric machine tool according to claim 1, **characterised in that** a least one temperature sensor (5a, 5b) is arranged adjacent to the electric motor (3), the electronic motor control unit (2) and/or the cooling duct (4).

3. Electric machine tool according to claim 1 or claim 2, **characterised in that** the electric motor (3) is a three-phase machine.

4. Standby method when the rotary drive of a liquid-cooled portable electric machine tool (1) according to one of claims I to 3 is deactivated, **characterised in that**, in a first step (1), a temperature (Ta, Tb) is measured by means of the temperature sensor (5a, 5b) and then compared with a lower limit temperature (UT) by means of the computing means (6), the electric motor (3) being supplied with a heating current (H) by means of the motor control unit (2) without being driven in a second step (II) when the temperature falls below this lower limit temperature (UT).

5. Standby method according to claim 4, **characterised in that**, in the second step (II), the heating current intensity II) increases as the temperature (Ta, Tb) deviates from the lower limit temperature (UT).

6. Standby method according to claim 4 or claim 5, **characterised in that**, in the first step, the lower limit temperature (UT) is in the range of 5°C to 10°C.

7. Standby method according to one of claims 4 to 6, **characterised in that**, in the first step (I), the temperature (Ta, Tb) is compared with an upper limit temperature (OT), the supply of current to the electric motor (3) activated in the second step (II) being terminated when this upper limit temperature (OT) is exceeded.

8. Standby method according to claim 7, **characterised in that** the upper limit temperature (OT) is in the range of + 10°C to + 30°C.

9. Standby method according to one of claims 4 to 8, **characterised in that** the first step (I) is repeated at staggered time intervals in a standby loop (8).

## Revendications

1. Machine-outil électrique refroidie par liquide, portable, apte à être reliée à an réseau d'alimentation en courant (9) et comprenant un canal de refroidissement (4) pour un liquide de refroidissement, une commande de moteur (2) pour un moteur électrique à commutation électronique (3), et au moins un capteur de température (5a, 5b) connecté à un moyen de calcul de la commande de moteur (2), **caractérisée en ce que** la commande de moteur (2) comporte une commande antigel (12) alimentée en mode d'attente.

2. Machine-outil électrique selon la revendication 1, **caractérisée en ce qu'**au moins un capteur de température (5a, 5b) est disposé au voisinage du moteur électrique (3), de l'électronique de moteur (2) et/ou du canal de refroidissement (4).

3. Machine-outil électrique selon la revendication 1 ou 2, **caractérisée en ce que** le moteur électrique (3) est un moteur triphasé.

4. Procédé d'attente en cas de désactivation du moyen d'entraînement en rotation d'une machine-outil électrique refroidie par liquide, portable (1) selon une des revendications 1 3, **caractérisé en ce que**, dans une première étape (I), une température (Ta, Tb) est mesurée au moyen du capteur de température (5a, 5b) et comparée à une température limite inférieure (UT) à l'aide du moyen de calcul (6), en cas de soupassement de cette température limite inférieure (UT) le moteur électrique (3) étant, dans une seconde étape (II), alimenté sans entraînement par un courant de chauffage (H) au moyen de la commande de moteur (2) du moteur électrique (3).

5. Procédé d'attente selon la revendication 4, **caractérisé en ce que**, dans la seconde étape (II), le courant de chauffage (H) augmente à mesuré que la température (Ta, Tb) s'éloigne de la température limite inférieure (UT).

6. Procédé d'attente selon la revendication 4 ou 5, **caractérisé en ce que**, dans la première étape, la température limite inférieure (UT) est comprise entre 5 °C et 10 °C.

7. Procédé d'attente selon la revendication 4 à 6, **caractérisé en ce que**, dans la première étape (I), la température (Ta, Tb) est comparée à une température limite supérieure (OT), l'alimentation en courant du moteur électrique (3) activée dans la deuxième étape (II) étant arrêtée en cas de surpassement de cette température limite supérieure (OT).

8. Procédé d'attente selon la revendication 7, **caractérisé en ce que** la température limite supérieure (QT) est comprise entre + 10°C et 30 °C.

9. Procédé d'attente selon une des revendications 4 à 8, **caractérisé en ce que** la première étape (I) est répétée de manière temporisée dans une boucle d'attente (8),
